Europäisches Patentamt

(19) European Patent Office    (11) Publication number: **0 299 408**
Office européen des brevets                                **B1**

## (12) EUROPEAN PATENT SPECIFICATION

(45) Date of publication of the patent specification:    (51) Int. Cl.⁵: **F16L 58/10**
05.12.90

(21) Application number: **88111057.1**

(22) Date of filing: **11.07.88**

---

(54) **A pipe coated with a resin layer on the inner surface thereof and a method for manufacturing the same.**

---

(30) Priority: **14.07.87 JP 175750/87**

(43) Date of publication of application:
**18.01.89 Bulletin 89/3**

(45) Publication of the grant of the patent:
**05.12.90 Bulletin 90/49**

(84) Designated Contracting States:
**BE DE ES FR GB IT NL**

(56) References cited:
**BE-A- 682 774
CH-A- 368 987
DD-A- 136 529
DE-A- 2 350 787
DE-A- 2 607 811
DE-B- 2 208 608**

**PATENT ABSTRACTS OF JAPAN, vol. 8,
no. 224 (M-337)(1681), 9th November 1984; & JP - A
- 59 123 621 (TOSHIBA K.K.) 17-07-1984**

(73) Proprietor: **HITACHI CABLE, LTD., 1-2,
Marunouchi 2-chome, Chiyoda-ku Tokyo 100(JP)**

(72) Inventor: **Seki, Kuniaki, 3322-15, Nakanuki, Tsuchiura-shi
Ibaraki-ken(JP)**
Inventor: **Nishiyama, Shinichi, 712-56, Nakanuki,
Tsuchiura-shi Ibaraki-ken(JP)**
Inventor: **Abe, Hajime, 605, Nakanuki, Tsuchiura-shi
Ibaraki-ken(JP)**
Inventor: **Hagiwara, Noboru, 338-1, Hongou
Niihari-mura, Niihari-gun Ibaraki-ken(JP)**

(74) Representative: **TER MEER - MÜLLER - STEINMEISTER
& PARTNER, Mauerkircherstrasse 45,
D-8000 München 80(DE)**

---

## Description

### FIELD OF THE INVENTION

The invention relates to a pipe coated with a resin layer on the inner surface thereof and a method for manufacturing the same, and more particularly to a pipe coated with a resin layer on the inner surface thereof which is used for a warm or cold water pipe, a gas pipe, a heat-transfer tube and a pipe similar thereto through which even a corrosive fluid can be flowed and to a method for manufacturing the same.

### BACKGROUND OF THE INVENTION

In conventional water pipe, gas pipe, heat-transfer tube and so on, the inner surface thereof is coated with a resin layer to improve a corrosion resistance property and avoid a chemical reaction between a pipe or tube material and a fluid flowing therein. Even in a consideration of a chemicals-proof property, thermal stability and so on, a fluoro resin is preferable to be used for such a purpose as described above. DE-A 2 350 787 discloses such a pipe.

However, a coating property of a widely used fluoro resin such as tetrafluoroethylene resin or tetrafluoroethylene-per fluoroalkylvinylether resin is not so good as expected because it is insoluble with solvent. Further, adhesiveness of the resin is low on a metal due to an inherent nature thereof. For these reasons, the resin is not suitable for a material with which a pipe is coated on the inner surface. In other words, a coating material is required to have a predetermined viscosity such that a long pipe is coated therewith uniformly on the inner surface. In this regard, such a property is not expected in the aforementioned resin. Even worse, it is necessary to adopt an appropriate measure such that the resin is firmly adhered to the inner surface of a pipe, especially, in a case where the pipe is of a metal.

### SUMMARY OF THE INVENTION

Accordingly, it is an object of the invention to provide a pipe coated with a resin layer on the inner surface thereof and a method for manufacturing the same in which adhesiveness of a coating material is improved, while preserving inherent properties of a fluoro resin such as thermal stability, waterproof, chemical-proof and so on.

It is a further object of the invention to provide a pipe coated with a resin layer on the inner surface thereof and a method for manufacturing the same in which a pipe applicable to a wide use such as a cold or warm water pipe, a gas pipe, a heat-transfer tube through which a corrosive fluid is flowed and so on is obtained.

It is a still further object of the invention to provide a pipe coated with a resin layer on the inner surface thereof and a method for manufacturing the same in which a pipe having a flexibility indispensable thereto is obtained so that the pipe can be bent in a pipe arrangement with a predetermined curvature.

According to a feature of the invention, a pipe coated with a resin layer on the inner surfaces thereof comprises,
a pipe member, and
a resin layer provided on the inner surface of said pipe member,
wherein said resin layer is of a mixture including thermal melting fluoro resin and fluorine elastomer(elastomer including fluorine).

According to a further feature of the invention, a method for manufacturing a pipe coated with a resin layer on the inner surface thereof comprises,
coating resin mixture including thermal melting fluoro resin and fluorine elastomer on the inner surface of a pipe member to provide a resin layer thereon,
drying said resin layer provided on the inner surface of said pipe member, and
heating said pipe member at a temperature more than a melting point of said thermal melting fluoro resin included in said resin mixture.

In the features of the invention, the thermal melting fluoro resin is at least one selected from an alternating copolymer of ethylene and tetrafluoroethylene, an alternating copolymer of ethylene and chlorotrifluoroethylene , tetrafluoroethylene-hexafluoropropylene copolymer and so on, and the fluorine elastomer is at least one selected from tetrafluoroethylene-propylene system copolymer, vinylidene fluoride-hexafluoropropylene system copolymer, vinylidene fluoride-chlorotrifluoroethylene, vinylidene fluoride-pentafluoropropene system copolymer, acrylate system elastomer including polyfluoroalkyl-group, tetrafluoroethylene-vinylidene fluoride-propylene system copolymer, tetrafluoroethylene-ethylene-isobutylene system copolymer, ethylene-hexafluoropropene system copolymer, tetrafluoroethylene-butene-1 system copolymer, tetrafluoroethylene-ethyl vinyl ether system copolymer, phospho nitrile elastomer including fluorine, tetrafluoroethylene-fluoro vinyl ether system copolymer and so on. Especially, tetrafluoroethylene propylene system copolymer is most appropriate to be selected therefrom.

The mixture ratio of fluorine elastomer is appropriate to range from 10 to 90 weight percents in regard to thermal melting fluorine resin for the reason why adhesiveness and flexibility of a coating film is not improved less than 10% and mechanical strength of the coating film becomes low more than 90%. A coating material in which finely powdered thermal melting resin is dispersed in fluorine elastomer dissolved in solvent is applied to the inner surface of a pipe, and a film thus coated thereon is dried and then heated at a temperature more than a melting point of the thermal melting fluorine resin for a predetermined time so that a resulting film in which the fluoro resin and the fluorine elastomer are linked with mesh like pattern is obtained on the inner surface of the pipe. As a matter of course, the above described heating treatment is performed below a temperature at which a pipe is subject to a deformation. A thickness of the coating film thus obtained is appropriate to range from 0.01 to 0.5mm. In the invention, a metal pipe such as copper, copper alloy, aluminum, aluminum alloy and so on having an outer diameter less than approximately 50mm is used to be coated with a resin layer on the inner surface. The metal pipe is preferable to have a number of grooves or projections to be extended parallel or helically in the axial direction thereby improving adhesiveness of a coating layer to the inner surface thereof. The grooves or projections may be continuous or intermittent along the axial direction, and may be intersected by crossing grooves or projections. Although the configuration and number of grooves or projections are not limited, a height or depth of the grooves or projections is preferable to range from 0.01 to 0.2mm for the reason why an effect of improving adhesiveness of a resin layer is limited to a small extent by less than 0.01mm, while a thickness uniformity of the resin layer is difficult to be maintained along the length thereof by more than 0.2mm, and a resin consuming amount is further increased.

## BRIEF DESCRIPTION OF DRAWINGS

The invention will be explained in more detail in conjunction with appended drawings wherein,

Fig.1 is a cross-sectional view showing a method for manufacturing a pipe coated with a resin layer on the inner surface thereof,

Fig.2 is a graph showing a relation between a strength of stripping a resin layer from the inner surface of a pipe and a mixture ratio of components of a coating resin, and

Fig.3 is a graph showing a relation between a strength of stripping a resin layer from the inner surface of a pipe and a depth of grooves.

## DESCRIPTION OF PREFERRED EMBODIMENTS

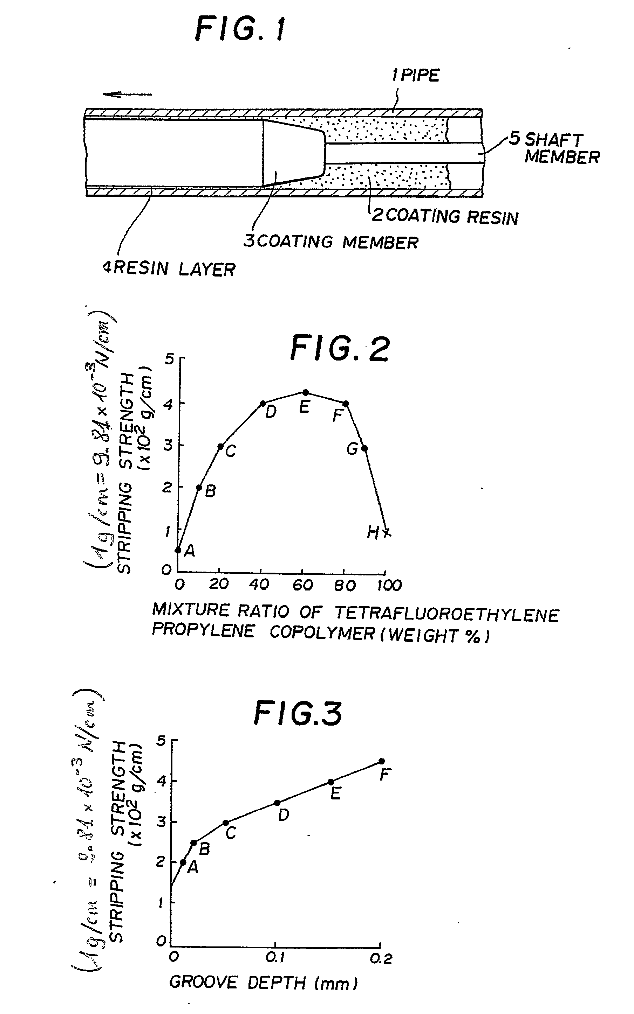

In Fig.1, there is shown a method for manufacturing a pipe coated with a resin layer on the inner surface thereof in an embodiment according to the invention. A coating member 3 which is supported by a shaft member 5 is inserted into a metal pipe 1, and coating resin 2 is supplied on one side of the coating member 3 to the inside of the metal pipe 1. In this circumstance, the metal pipe 1 is moved in a direction indicated by an arrow without receiving any deformation. Although the coating resin 2 tends to be left behind the coating member 3, a major portion of the coating resin 2 is squeezed in a narrow gap between the periphery of the coating member3 and the inner surface of the metal pipe 1 thereby being formed as a resin layer 4 on the inner surface thereof. A thickness of the resin layer 4 thus formed thereon is adjusted by selecting a predetermined outer diameter of the coating member3 dependent on a inner diameter of the metal pipe 1.

Although the coating member3 is illustrated by a taper shaped plug in Fig.1, it may be of another shape, for instance, of a ball shaped plug. Although the resin layer 4 is formed on the inner surface of the metal pipe 1 which is not subject to any deformation, the metal pipe 1 may be coated with the resin layer 4 on an inner surface portion at a short distance front position of which a diameter of the metal pipe 1 is shrunken by a pulling die. In a case where the metal pipe 1 is coated on the inner surface thereof with the resin layer 4 under the shrinkage of a diameter thereof, the coating member 3 may be provided at a position inside the metal pipe 1 where a pulling die is provided on the periphery of the metal pipe 1 as if a pulling plug is provided at the position, or may be provided to be connected through a connecting rod to such a pulling plug which is provided at a short distance front position thereof. In such a case, a longer metal pipe can be coated on the inner surface thereof with a resin layer than the metal pipe 1 shown in Fig.1, if the coating member 3 and a supporting member to be connected to the coating member 3 are floated inside the metal pipe 1.

The resin layer 4 thus formed on the inner surface of the metal pipe 1 is dried and then heated at a temperature more than a melting point of a thermal melting resin included in the coating resin 2 and less than that of the metal pipe 1 thereby providing a predetermined thin resin layer in which components thereof are linked with a mesh like pattern.

The embodiment described above will be explained in more detail in following Examples 1 to 4.

[Example 1]

A copper pipe 1 having an outer diameter of 12.7mm and a thickness of 0.7mm in which sixty grooves each having a depth of 0.05mm and provided in a constant interval along the inner periphery thereof is prepared, and eight compositions for coating resin 2 (paint dissolved by mixture solvent including butyl acetate and ethyl acetate in which a solid proportion is fifty weight percents) in which tetrafluoroethylene -propylene copolymer (AFLUS 100 of ASAHI GLASS Co.,Ltd. Tokyo, Japan) is mixed ranging from 0 to 100 weight percents with a finely powdered base of tetrafluoroethylene-ethylene copolymer are further prepared. Eight copper pipes 1 each thus prepared are coated on the inner surfaces thereof with the eight compositions of the coating resin 2 also thus prepared, respectively, to form resin layers 4 each having a thickness of 0.15mm in a manner as shown in Fig.1. All of the copper pipes 1 thus coated on the inner surfaces with the resin layers 4 are dried, and then heated at temperatures, the maximum one of which is 350°c, for times ranging from 30 to 60 minutes to provide complete films having thicknesses ranging from 30 to 70μm.

The films of the eight copper pipes 1 are measured in regard to stripping strengths dependent on the mixture ratios of tetrafluoroethylene-propylene copolymer as shown by eight points "A","ρ","c",....,"H" in Fig.2. The stripping strength of each copper pipe 1 is defined by a force which is required to strip the film from the inner surface of the copper pipe 1 in a width of 10mm and in a direction of 90 degrees. The stripping strength may be referred to as "adhering strength". In the result of the measurement, a definite stripping strength can not be measured in a case where a mixture ratio of tetrafluoroethylene-propylene copolymer is 100% as shown by the point "H" in Fig.2, because a mechanical strength of the resin is low.

[Example 2]

Seventy copper pipes 1 each having an outer diameter of 12.7mm and a thickness of 0.7mm, and each of which is provided on the inner surface thereof with seventy grooves each having a width of 0.2mm, an interval of 0.5mm along the inner periphery thereof, and depths ranging from 0.005 to 0.2mm are prepared, and coating resin 2 (paint dissolved by mixture solvent including butyl acetate and ethyl acetate in which a solid proportion is fifty weight percents) in which tetrafluoroethylene-ethylene copolymer (AFLUS 100 of ASAHI GLASS Co.,Ltd. Tokyo, Japan) is mixed ranging from 0 to 100 weight percents with a finely powdered base of tetrafluoroethylene-ethylene copolymer(AFLON COP C-88A of ASAHI GLASS Co.,Ltd. Tokyo , Japan) is further prepared. A resin layer 4 is formed to be a thickness of approximately 0.1mm on the inner surface of each copper pipe 1 and then dried in the same manner as in the Example 1. Thereafter, each copper pipe 1 is heated in the same manner as in the Example 1 thereby providing a complete film having an average thickness of 30μm on the ridge between the grooves.

The stripping strength of the film is measured in each copper pipe 1 and is shown by six points "A","n","c",...."F" in Fig.3. As apparent from the result, the stripping strength is increased dependent on an increased depth of the grooves.

[Example 3]

An aluminum pipe 1 having an outer diameter of 20mm and a thickness of 2mm in which grooves each having a depth of 0.1mm, a width of 0.4mm, and an interval of 0.7mm along the inner periphery thereof are provided on the inner surface is prepared, and coating resin 2 (paint dissolved by solvent including ethyl acetate in which a solid proportion is fifty percents) in which tetrafluoroethylene-propylene copolymer(AFLUS 100 of ASAHI GLASS Co.,Ltd. Tokyo, Japan) of fifty weight percents and tetrafluoroethylene-hexafluoropropene coplymer (NEOFLON FEP powdered paint NC-1500 of DAIKIN INDUSTRIES,Ltd. Tokyo, Japan) of fifty weight percents are mixed with each other is further prepared. A film having an average thickness of 40μm on the ridge between the grooves is provided on the inner surface of the aluminum pipe 1 through the process of the coating, drying and heating treatments as described in the Examples 1 and 2.

The stripping strength of the film thus obtained is measured in the same manner as in the Examples 1 and 2, and it is confirmed from the result of 520g/cm (5.10 N/cm) that adhesiveness is as good as expected.

[Example 4]

A copper pipe 1 having an outer diameter of 22.2mm and a thickness of 1.14mm in which grooves each having a depth of 0.1mm, a width of 0.3mm, and an interval of 0.6mm are provided on the inner surface thereof is prepared, and coating resin 2 (paint dissolved by solvent of butyl acetate in which a solid proportion is fifth weight percents) in which finely powdered trifluoroethylene(DIFLON of DAIKIN INDUSTRIES,Ltd. Tokyo, Japan) and vinylidene difluoride-proplylene fluoride copolymer elastomer (DIEL G801 of DAIKIN INDUSTRIES,Ltd. Tokyo, Japan) are mixed with each other is further prepared. A thin resin layer 4 of approximately 0.1mm is formed on the inner surface of the copper pipe 1 in the same manner as in the Examples 1 to 3, and then dried in an atmosphere of 100°c in a furnace. The copper pipe 1 is then heated at a temperature of 260°c for thirty minutes to provide a film having an average thickness of 30μm on the ridge of the grooves on the inner surface thereof. As a result, the stripping strength of 300g/cm (2.94 N/cm)is obtained in accordance with the measurement conducted in the same manner as in the Examples 1 to 3.

**Claims**

1. A pipe coated with a resin layer on the inner surface thereof comprising,
a pipe member, and
a resin layer provided on the inner surface of said pipe member,
characterised in that said resin layer is of a mixture including thermal melting fluoro resin and fluorine elastomer.

2. A pipe coated with a resin layer on the inner surface thereof according to claim1,
wherein said fluorine elastomer is tetrafluoroethylene-propylene copolymer.

3. A pipe coated with a resin layer on the inner surface thereof according to claim 1 or 2 ,
wherein a mixture ratio of said fluorine elastomer ranges from 10 to 90 weight percents.

4. A pipe coated with a resin layer on the inner surface thereof according to claim1,
wherein a thickness of said resin layer ranges from 0.01 to 0.2mm.

5. A pipe coated with a resin layer on the inner surface thereof according to claim1,
wherein said pipe member is provided with grooves or projections each having a depth or height ranging from 0.01 to 0.2mm.

6. A pipe coated with a resin layer on the inner surface thereof according to claim 1,
wherein said pipe member is of a metal.

7. A method for manufacturing a pipe coated with a resin layer on the inner surface thereof comprising,
coating resin mixture including thermal melting fluoro resin and fluorine elastomer on the inner surface of a pipe member to provide a resin layer thereon,
drying said resin layer provided on the inner surface of said pipe member, and

heating said pipe member at a temperature more than a melting point of said thermal melting fluoro resin included in said resin mixture.

8. A method for manufacturing a pipe coated with a resin layer on the inner surface thereof according to claim 7, wherein a step of coating said resin mixture is performed by means of a coating member inserted into said pipe member, the pipe being moved axially.

9. A method for manufacturing a pipe coated with a resin layer on the inner surface thereof according to claim 8, wherein said pipe member is moved in an axial direction thereof without receiving any deformation.

10. A method for manufacturing a pipe coated with a resin layer on the inner surface thereof according to claim 7 or 8, wherein said pipe member is coated with said resin layer on the inner surface thereof under the shrinkage of the outer diameter thereof.

11. A method for manufacturing a pipe coated with a resin layer on the inner surface thereof according to claim 7 or 8, wherein said pipe member is coated with said resin layer on the inner surface thereof just after the shrinkage of the outer diameter thereof .

12. A method for manufacturing a pipe coated with a resin layer on the inner surface thereof according to any one of claims 7 to 11, wherein said pipe member is provided on the inner surface thereof with a plurality of grooves or projections to which said resin mixture is applied.

**Patentansprüche**

1. Rohr, das mit einer Harzschicht auf seiner inneren Oberfläche ausgekleidet ist, mit

einem Rohrelement und

einer auf der inneren Oberfläche des Rohrelements

vorgesehenen Harzschicht,

dadurch gekennzeichnet, dass die Harzschicht aus einer Mischung, die ein in der Wärme schmelzendes Fluorharz und ein Fluorelastomer enthält, besteht.

2. Rohr, das mit einer Harzschicht auf seiner inneren Oberfläche ausgekleidet ist, nach Anspruch 1, worin das Fluorelastomer ein Tetrafluorethylen-Propylen-Copolymer ist.

3. Rohr, das mit einer Harzschicht auf seiner inneren Oberfläche ausgekleidet ist, nach Anspruch 1 oder 2, worin das Mischungsverhältnis des Fluorelastomeren im Bereich von 10 bis 90 Gew.-% liegt.

4. Rohr, das mit einer Harzschicht auf seiner inneren Oberfläche ausgekleidet ist, nach Anspruch 1, worin die Dicke der Harzschicht im Bereich von 0,01 bis 0,2 mm liegt.

5. Rohr, das mit einer Harzschicht auf seiner inneren Oberfläche ausgekleidet ist, nach Anspruch 1, worin das Rohrelement mit Rillen oder Vorsprüngen mit jeweils Tiefen oder Höhen im Bereich von 0,01 bis 0,2 mm versehen ist.

6. Rohr, das mit einer Harzschicht auf seiner inneren Oberfläche ausgekleidet ist, nach Anspruch 1, worin das Rohrelement aus einem Metall besteht.

7. Verfahren zur Herstellung eines Rohres, das mit einer Harzschicht auf seiner inneren Oberfläche ausgekleidet ist, welches darin besteht, daß man

– eine Harzschicht, die ein in der Wärme schmelzendes Fluorharz und ein Fluorelastomer enthält, auf die innere Oberfläche eines Rohrelements unter Bildung einer Harzschicht darauf aufträgt,

die Harzschicht auf der inneren Oberfläche des Rohrelements trocknet und

– das Rohrelement bei einer Temperatur, die höher als der Schmelzpunkt des in der Harzmischung enthaltenen, in der Wärme schmelzenden Fluorharzes ist, erhitzt.

8. Verfahren zur Herstellung eines Rohres, das mit einer Harzschicht auf seiner inneren Oberfläche ausgekleidet ist, nach Anspruch 7, wobei man die Harzmischung mittels einer in das Rohrelement eingeführten Beschichtungseinrichtung aufträgt und dabei das Rohr axial bewegt.

9. Verfahren zur Herstellung eines Rohres, das mit einer Harzschicht auf seiner inneren Oberfläche ausgekleidet ist, nach Anspruch 8, wobei man das Rohrelement in seiner Axialrichtung ohne es zu verformen bewegt.

10. Verfahren zur Herstellung eines Rohres, das mit einer Harzschicht auf seiner inneren Oberfläche ausgekleidet ist, nach Anspruch 7 oder 8, wobei man das Rohrelement mit der Harzschicht auf seiner inneren Oberfläche unter Schrumpfung seines äußeren Durchmessers ausgekleidet.

11. Verfahren zur Herstellung eines Rohres, das mit einer Harzschicht auf seiner inneren Oberfläche ausgekleidet ist, nach Anspruch 7 oder 8, wobei man das Rohrelement mit der Harzschicht auf seiner inneren Oberfläche unmittelbar nach Schrumpfung seines äußeren Durchmessers ausgekleidet.

12. Verfahren zur Herstellung eines Rohres, das mit einer Harzschicht auf seiner inneren Oberfläche ausgekleidet ist, nach einem der Ansprüche 7 bis 11, wobei man das Rohrelement auf seiner inneren Oberfläche mit einer Vielzahl von Rillen oder Vorsprüngen, auf welche die Harzmischung aufgetragen wird, versieht.

**Revendications**

1. Tuyau revêtu d'une couche de résine sur sa surface interne comprenant, un élément de tuyau, et une couche de résine formée sur la surface interne dudit élément de tuyau, caractérisé en ce que ladite couche de résine est un mélange comprenant une résine fluorée fondant à chaud et un élastomère fluoré.

2. Tuyau revêtu d'une couche de résine sur sa surface interne selon la revendication 1, dans lequel ledit élastomère fluoré est un copolymère tétrafluoréthylène-propylène.

3. Tuyau revêtu d'une couche de résine sur sa surface interne selon la revendication 1 ou 2, dans lequel la proportion de mélange dudit élastomère fluoré est comprise entre 10 et 90 pour cent en poids.

4. Tuyau revêtu d'une couche de résine sur sa surface interne selon la revendication 1, dans lequel l'épaisseur de ladite couche de résine est comprise entre 0,01 et 0,2 mm.

5. Tuyau revêtu d'une couche de résine sur sa surface interne selon la revendication 1, dans lequel ledit élément de tuyau comporte des rainures ou des nervures ayant chacune une profondeur ou une hauteur comprise entre 0,01 et 0,2 mm.

6. Tuyau revêtu d'une couche de résine sur sa surface interne selon la revendication 1, dans lequel ledit élément de tuyau est constitué d'un métal.

7. Procédé de fabrication d'un tuyau revêtu d'une couche de résine sur sa surface interne consistant à appliquer un mélange résineux comprenant une résine fluorée fondant à chaud et un élastomère fluoré sur la surface interne d'un élément de tuyau pour y former une couche de résine, sécher ladite couche de résine formée sur la surface interne dudit élément de tuyau, et chauffer ledit élément de tuyau à une température supérieure au point de fusion de ladite résine fluorée fondant à chaud contenue dans ledit mélange résineux.

8. Procédé de fabrication d'un tuyau revêtu d'une couche de résine sur sa surface interne selon la revendication 7, dans lequel l'étape d'application dudit mélange résineux est réalisée au moyen d'un élément applicateur introduit dans ledit élément de tuyau, le tuyau étant déplacé axialement.

9. Procédé de fabrication d'un tuyau revêtu d'une couche de résine sur sa surface interne selon la revendication 8, dans lequel ledit élément de tuyau est déplacé dans sa direction axiale sans subir aucune déformation.

10. Procédé de fabrication d'un tuyau revêtu d'une couche de résine sur sa surface interne selon la revendication 7 ou 8, dans lequel ledit élément de tuyau est revêtu de ladite couche de résine sur sa surface interne tandis que son diamètre externe est réduit.

11. Procédé de fabrication d'un tuyau revêtu d'une couche de résine sur sa surface interne selon la revendication 7 ou 8, dans lequel ledit élément de tuyau est revêtu de ladite couche de résine sur sa surface interne immédiatement après la réduction de son diamètre externe.

12. Procédé de fabrication d'un tuyau revêtu d'une couche de résine sur sa surface interne selon l'une quelconque des revendications 7 à 11, dans lequel ledit élément de tuyau comporte, sur sa surface interne, plusieurs rainures ou nervures sur lesquelles est appliqué ledit mélange résineux.

# FIG. 1

1 PIPE

5 SHAFT MEMBER

2 COATING RESIN

3 COATING MEMBER

4 RESIN LAYER

# FIG. 2

$(1 g/cm = 9.84 \times 10^{-3} N/cm)$
STRIPPING STRENGTH $(\times 10^2 \, g/cm)$

MIXTURE RATIO OF TETRAFLUOROETHYLENE PROPYLENE COPOLYMER (WEIGHT %)

# FIG. 3

$(1 g/cm = 9.84 \times 10^{-3} N/cm)$
STRIPPING STRENGTH $(\times 10^2 \, g/cm)$

GROOVE DEPTH (mm)